# EUROPEAN PATENT APPLICATION

(11) **EP 3 613 795 A1**
(43) Date of publication of application: **26.02.2020**
(21) Application number: 18787566.1
(22) Date of filing: 10.04.2018
(51) Int. Cl.: C08J 5/00, C08J 5/02, C08L 23/00, C08L 23/26, C08L 25/08, C08L 53/02, C08L 77/00

(54) **MOLDED ARTICLE AND METHOD FOR PRODUCING SAME**

(30) Priority: 19.04.2017 JP 2017083213
(71) Applicant: Toyota Boshoku Kabushiki Kaisha, Kariya-shi, Aichi 448-8651 (JP)
(72) Inventor: KITO Masayuki, Kariya-shi Aichi 448-8651 (JP); GEHO Kosuke, Kariya-shi Aichi 448-8651 (JP); SAKO Mitsutaka, Kariya-shi Aichi 448-8651 (JP); TAKAHASHI Goro, Kariya-shi Aichi 448-8651 (JP)
(74) Representative: TBK
(86) International application number: PCT/JP2018/015148
(87) International publication number: WO 2018/193923

(57) **Abstract**

Disclosed herein are a molded article including a repeatedly-movable part that achieves both fatigue resistance and mechanical strength and a method for producing a molded article which is capable of improving the design flexibility of a mold and the shape flexibility of a molded article and of reducing the number of processes. The molded article includes a repeatedly-movable part 15 capable of being repeatedly bent or curved, and the repeatedly-movable part 15 is made of a thermoplastic resin composition containing a polyolefin resin, a polyamide resin, and a modified elastomer having a reactive group that reacts with the polyamide resin. The method is a method for producing a molded article including a repeatedly-movable part capable of being repeatedly bent or curved, the method including using, as a molding material for the repeatedly-movable part, a thermoplastic resin composition containing a polyolefin resin, a polyamide resin, and a modified elastomer having a reactive group that reacts with the polyamide resin.

## Description

### TECHNICAL FIELD

The present invention relates to a molded article and a method for producing the same. More specifically, the present invention relates to a molded article having a repeatedly-movable part and a method for producing the same.

### BACKGROUND ART

For example, resin products have recently been known in which a hinge and other parts are integrally molded. Specific examples thereof include resin products obtained by integrally molding a container, a hinge, and a lid so that the hinge connects the container and the lid together. Such resin products are often produced using hinge-moldable grade polyolefin resins having relatively well-balanced fatigue resistance and moldability.

It is to be noted that the following Patent Literatures 1 to 4 disclose resin mixtures containing a polyolefin resin and a polyamide resin.

### CITATIONS LIST

### PATENT LITERATURES

Patent Literature 1: JP 2013-147645 A
Patent Literature 2: JP 2013-147646 A
Patent Literature 3: JP 2013-147647 A
Patent Literature 4: JP 2013-147648 A

### SUMMARY OF INVENTION

### TECHNICAL PROBLEMS

Such hinge-moldable polyolefin resins as described above have excellent fluidity in a molten state, and therefore can successfully flow into a hinge cavity space that is much narrower than a container and a lid. However, such polyolefin resins having high fluidity are controlled to have low molecular weights, and are therefore difficult to have high mechanical strength. Therefore, mechanical strength is secured by increasing the thicknesses of a container and a lid. However, such securing of strength by an increase in thickness leads to an increase in cost due to an increase in the amounts of raw materials used, and causes problems such as an increase in weight and an increase in installation space in the case of automotive parts and the like, which makes it impossible to respond to requests such as low fuel consumption and space-saving. Alternatively, mechanical strength can be achieved also by selecting polyolefin resins having high molecular weights. However, high-molecular-weight resins are relatively inferior in moldability, and therefore fatigue resistance is reduced and molding of a hinge itself is difficult. When a molded article having such a repeatedly-movable part is produced, resin choices are limited in consideration of molding conditions, and therefore there is a problem that it is difficult to achieve both fatigue resistance and mechanical strength.

Further, even when a hinge-moldable grade polyolefin resin is used to form a hinge, there is a problem that the direction of injection is limited during injection molding. More specifically, when a material is flowed so as to be parallel to the bending line of a hinge, the hinge is likely to be fractured due to bending. For this reason, when a hinge is formed by molding, a mold needs to be designed so that a material is flowed so as to be perpendicular to the bending line, which causes a problem that the shape of a resulting molded article is limited or the design of a mold is limited. Further, even when random polypropylene often used for forming such a hinge by molding can overcome such various problems as described above, the hinge is preliminarily manually bent to make a crease just after injection molding but before a resulting resin product is allowed to cool. Such a preliminary work improves the resistance to whitening on bending and fatigue resistance of the hinge. However, this work is, in fact, manually performed, which is one of the causes of an increased number of processes or increased costs.

In light of the above circumstances, it is an object of the present invention to provide a molded article having a repeatedly-movable part that achieves both fatigue resistance and mechanical strength. It is also an object of the present invention to provide a method for producing a molded article which is capable of improving the design flexibility of a mold and the shape flexibility of a molded article and of reducing the number of processes.

### SOLUTIONS TO PROBLEMS

That is, the present invention provides the following.

A molded article according to claim 1 includes a repeatedly-movable part capable of being repeatedly bent or curved, wherein
the repeatedly-movable part is made of a thermoplastic resin composition containing a polyolefin resin, a polyamide resin, and a modified elastomer having a reactive group that reacts with the polyamide resin.

A molded article according to claim 2 is the molded article according to claim 1, wherein the repeatedly-movable part is integrally molded with another part.

A molded article according to claim 3 is the molded article according to claim 1 or 2, wherein the repeatedly-movable part is a hinge part, a bellows part, or a leaf spring.

A molded article according to claim 4 is the molded article according to any one of claims 1 to 3, wherein the polyamide resin has a structure in which a hydrocarbon group between adjacent amide bonds in a main chain has a linear chain of 6 or more carbon atoms.

A molded article according to claim 5 is the molded article according to any one of claims 1 to 4, wherein the modified elastomer is an olefin-based thermoplastic elastomer having, as a skeleton, a copolymer of ethylene or propylene and an α-olefin having 3 to 8 carbon atoms or a styrene-based thermoplastic elastomer having a styrene skeleton.

A molded article according to claim 6 is the molded article according to any one of claims 1 to 5, which further includes a continuous phase (A) formed of the polyolefin resin, and
a dispersed phase (B) dispersed in the continuous phase (A) and formed of the polyamide resin and the modified elastomer.

A molded article according to claim 7 is the molded article according to claim 6, wherein the dispersed phase (B) has a continuous phase (B₁) containing the polyamide resin and a fine dispersed phase (B₂) dispersed in the continuous phase (B₁) and containing the modified elastomer.

A method for producing a molded article according to claim 8 is a method for producing a molded article including a repeatedly-movable part capable of being repeatedly bent or curved, the method including
using, as a molding material for the repeatedly-movable part, a thermoplastic resin composition containing a polyolefin resin, a polyamide resin, and a modified elastomer having a reactive group that reacts with the polyamide resin.

### ADVANTAGEOUS EFFECTS OF INVENTION

According to the present invention, it is possible to provide a molded article having a repeatedly-movable part that achieves both fatigue resistance and mechanical strength.

According to the present invention, it is possible to provide a method for producing a molded article which is capable of improving the design flexibility of a mold and the shape flexibility of a molded article and of reducing the number of processes in the production of a molded article.

### BRIEF DESCRIPTION OF DRAWINGS

Fig. 1 is a perspective view for explaining an example of a molded article (console box lid body) according to the present invention.
Fig. 2 is a perspective view for explaining an example of a molded article (container with an integrally-molded hinge part) according to the present invention.
Fig. 3 is a perspective view for explaining an example of a molded article (container with an integrally-molded hinge part) according to the present invention.
Fig. 4 is a perspective view for explaining an example of a molded article (part for hinge) according to the present invention.
Fig. 5 is a perspective view for explaining an example of a molded article (tubular body with an integrally-molded bellows part) according to the present invention.
Fig. 6 is a perspective view for explaining an example of a molded article (bellows part) according to the present invention.
Fig. 7 is a perspective view for explaining an example of a molded article (leaf spring part) according to the present invention.
Fig. 8 is a schematic diagram for explaining an example of the phase structure of a thermoplastic resin composition constituting a molded article according to the present invention.
Fig. 9 is a schematic diagram for explaining another example of the phase structure of a thermoplastic resin composition constituting a molded article according to the present invention.
Fig. 10 is a graph showing the fatigue resistance of molded articles according to the present invention.

### DESCRIPTION OF EMBODIMENTS

The particulars shown herein are by way of example and for the purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for a fundamental understanding of the present invention, and the description taken with the drawings makes apparent to those skilled in the art how the several forms of the present invention may be embodied in practice.

A molded article according to the present invention has a repeatedly-movable part that can repeatedly be bent or curved. The repeatedly-movable part is made of a thermoplastic resin composition containing a polyolefin resin, a polyamide resin, and a modified elastomer having a reactive group that reacts with the polyamide resin.

The repeatedly-movable part refers to a part that can repeatedly be bent, a part that can repeatedly be curved, or a part that can repeatedly be bent and repeatedly be curved. Examples of the repeatedly-movable part include a hinge, a bellows part, and a leaf spring. When a thermoplastic resin composition constituting such repeatedly-movable parts has high fatigue resistance, high bending durability and high flexure durability can be imparted to these repeatedly-movable parts.

However, such a thermoplastic resin composition having excellent fatigue resistance cannot generally achieve excellent mechanical properties (e.g., high elastic modulus, high impact resistance). That is, it is usually difficult to achieve both fatigue resistance and mechanical strength. In addition, thermoplastic resin compositions having excellent fluidity in a molten state and excellent moldability are virtually unknown.

The above-mentioned Patent Literatures 1 to 4 disclose that a thermoplastic resin composition containing a polyolefin resin, a polyamide resin, and a modified elastomer having a reactive group that reacts with the polyamide resin can achieve excellent mechanical strength. However, it has been unknown whether such a thermoplastic resin composition can offer another performance.

The present inventors have further intensively studied the above-described thermoplastic resin composition and have found that high fatigue resistance and excellent moldability can be achieved in addition to mechanical strength disclosed in Patent Literatures 1 to 4. Therefore, it has been found that the use of the above-described thermoplastic resin composition makes it possible to form a molded article having a repeatedly-movable part and to impart high bending durability and high flexure durability to the repeatedly-movable part, and further makes it possible, when a repeatedly-movable part is integrally molded with other parts, to impart high mechanical strength to the other parts. In addition, it has been found that the above-described thermoplastic resin composition has excellent fluidity so that a repeatedly-movable part and other parts can integrally be molded and a molded article having a complicated shape can be formed. These findings have led to the completion of the molded article according to the present invention.

Further, although the reason is unknown, it has been found that when a hinge is formed by injection molding, the direction of injection of the above-described thermoplastic resin composition is not limited, and therefore the thermoplastic resin composition can be injected either parallel or perpendicular to the bending line of the hinge. This is advantageous in that the design flexibility of a mold is high when the molded article according to the present invention is produced. In addition, it has also been found that such a hinge can have high resistance to whitening on bending and high fatigue resistance without performing preliminary bending. This is advantageous in that the number of processes can be reduced when the molded article according to the present invention is produced.

As described above, examples of the repeatedly-movable part include a hinge, a bellows part, and a leaf spring. Specific examples of the repeatedly-movable part are as follows.

### (1) Hinge part (hinge part integrally molded with other parts)

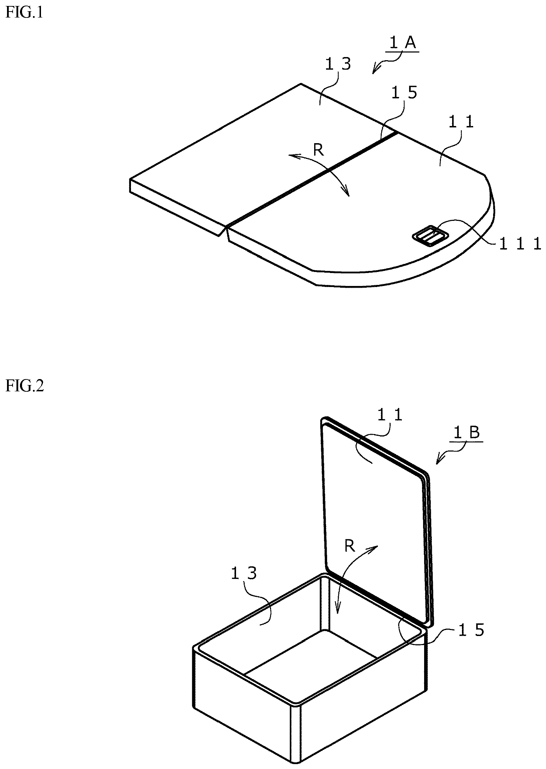

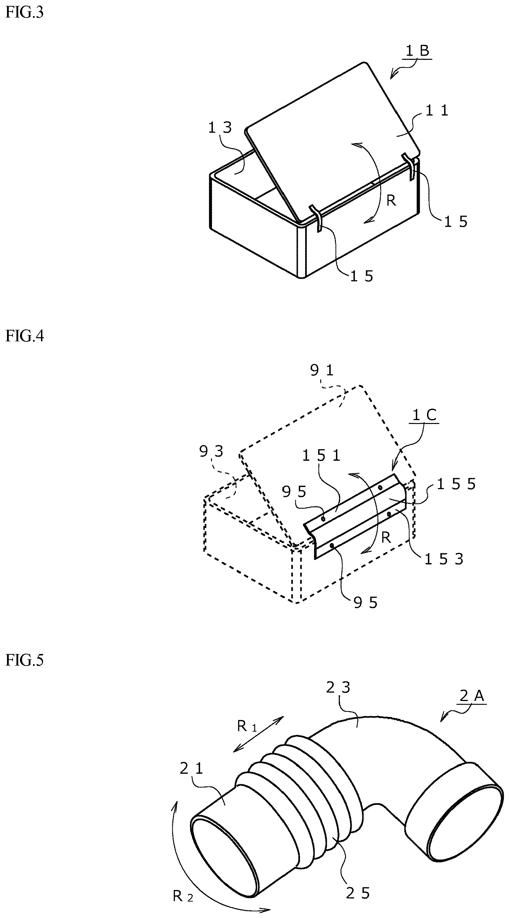

The hinge part is a repeatedly-movable part that can repeatedly be bent or curved. Such a hinge part is sometimes referred to as, for example, an integral hinge, a living hinge, or a permanent hinge. The hinge part may be integrally molded with other parts or separately molded. An example of the integrally-molded hinge part includes a hinge part interposed between a first part and a second part to connect these parts together. Examples of a molded article having such a hinge part include an open-close bendable lid 1A (Fig. 1) and a container 1B with a lid part (Fig. 2 and Fig. 3).

The open-close bendable lid 1A (Fig. 1) is a molded article having a front lid part 11 (first part) and a rear lid part 13 (second part), and a hinge part 15 connecting them together. In the case of the open-close bendable lid 1A, the hinge part 15 is movable, and therefore the front lid part 11 is swingably or rotatably connected to the rear lid part 13 around the hinge part 15 as indicated by an arrow R shown in Fig. 1 (the front lid part 11 has a knob 111).

The container 1B (Fig. 2 and Fig. 3) is a molded article having a lid part 11 (first part), a container part 13 (second part), and a hinge part 15 connecting them. In the case of the container 1B, the hinge part 15 is movable, and therefore the lid part 11 is swingably or rotatably connected to the container part 13 around the hinge part 15 as indicated by an arrow R shown in Fig. 2 or Fig. 3. In the container 1B shown in Fig. 2, the hinge part 15 is widely formed along the boundary between the lid part 11 and the container part 13. On the other hand, in the container 1B shown in Fig. 3, the lid part 11 and the container part 13 are separately formed and are therefore connected together by two narrow hinge parts 15 provided outside the container.

### (2) Part for hinge (part for hinge molded separately from other parts)

Apart for hinge 1C is a repeatedly-movable part that can repeatedly be bent or curved substantially as a whole (Fig. 4). That is, the part for hinge 1C is a molded article that can repeatedly be moved as a whole. More specifically, the part for hinge 1C can have two base portions 151 and 155 and an intercalated portion 153 interposed between them. As shown in Fig. 4, the base portion 151 can be fixed to a lid body 91 with, for example, screws 95 and the base portion 155 can be fixed to a containing body 93 with, for example, screws 95. In this case, the part for hinge 1C itself is movable, and therefore the lid body 91 is swingably or rotatably connected to the containing body 93 around the intercalated portion 153 as indicated by an arrow R shown in Fig. 4.

### (3) Bellows part

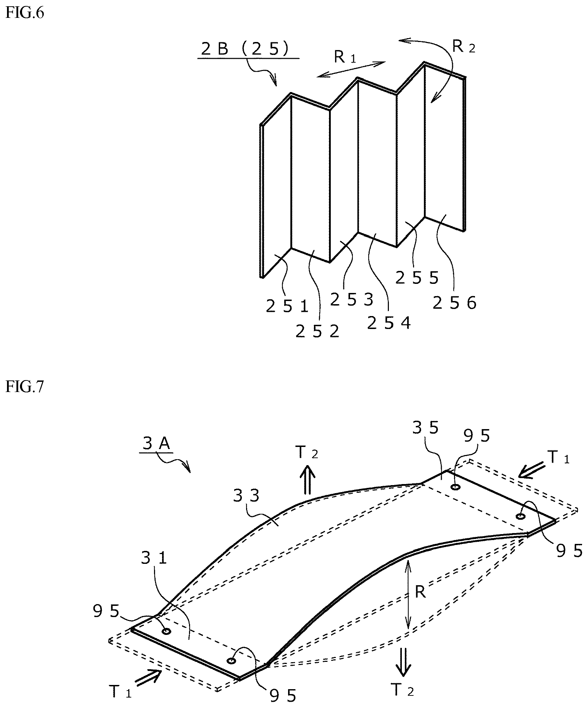

The bellows part usually has a continuous concavo-convex-shaped appearance. Specific examples of the bellows part include a part having an appearance like stacked inner tubes (Fig. 5) and a zigzag-shaped part (Fig. 6). Such parts can be used as, for example, bellows hoses and boot products. Similarly to the hinge part, this bellows part is also a repeatedly-movable part that can repeatedly be bent (in a direction indicated by an arrow R₁ shown in Fig. 5 or Fig. 6) or curved (in a direction indicated by an arrow R₂ shown in Fig. 5 or Fig. 6).

An example of a molded article having a bellows part as a repeatedly-movable part includes a molded article having a bellows part interposed between a first part and a second part to connect them together. A specific example of such a molded article includes a bellows tube 2A (Fig. 5).

The bellows tube 2A (Fig. 5) is a molded article having a straight tube part 21 (first part), a curved tube part 23 (second part), and a bellows part 25 connecting them together. As indicated by the arrow R₁ shown in Fig. 5, the bellows part 25 of the bellows tube 2A can be moved so as to expand and contract in a longitudinal direction, and therefore the positional relationship between the straight tube part 21 and the curved tube part 23 can also be changed accordingly. Likewise, as indicated by the arrow R₂ shown in Fig. 5, the bellows part 25 can asymmetrically expand and contract in a width direction, and therefore the positional relationship between the straight tube part 21 and the curved tube part 23 can also be changed accordingly. Such movability makes it possible to obtain a shock absorption effect and a vibration absorption effect.

Although not shown in the drawings, the bellows tube 2A (Fig. 5) can be formed by, for example, forming only the bellows part 25 by molding as one molded article and connecting the straight tube part 21 and the curved tube part 23, which are formed as other molded articles, together by, for example, inserting them into the bellows part 25 interposed between them. In this case, the bellows part 25 is a bellows part formed as a molded article separately from other parts.

Another example of the bellows part includes a bellows plate 2B (Fig. 6). The bellows plate 2B (Fig. 6) is a molded article in which plate-shaped members 251 to 256 are integrally molded in a zig-zag manner. As indicated by the arrow R₁ shown in Fig. 6, this bellows plate 2B expands and contracts in a direction such that the plate-shaped members of the bellows part 25 are stacked, and therefore the entire length of zig-zag curve of the bellows plate 2B can be changed. Further, as indicated by the arrow R₂ shown in Fig. 6, for example, when the plate-shaped member 251 is fixed, the shape of the bellows plate 2B can be changed in such a manner that the plate-shaped member 256-side end swings from side to side. Such movability makes it possible to obtain a shock absorption effect and a vibration absorption effect.

### (4) Leaf spring

The leaf spring usually has a plate-like appearance or an appearance like an almost plate slightly shaped. A specific example of such a leaf spring includes a plate-shaped leaf spring 3A (Fig. 7). This leaf spring is a repeatedly-movable part that can repeatedly be curved as a whole. Specifically, the leaf spring can be used as a lumbar support, a contour mat, or the like.

For example, the leaf spring 3A (Fig. 7) has a plate shape at no load as indicated by S (see Fig. 7). The plate-shaped leaf spring 3A can be curved as indicated by an arrow R by applying a stress T₁ thereto. Similarly, the leaf spring 3A can be curved as indicated by the arrow R also by applying a stress T₂ thereto. Such movability makes it possible to obtain a shock absorption effect and a vibration absorption effect.

For example, the ends of the leaf spring 3A can be fixed as a base portion 31 and a base portion 35 to another part not shown with screws 95 or the like.

The thickness of the repeatedly-movable part of the molded article according to the present invention (the type of which is not limited to the above-described (1) to (4)) is not limited, but may be, for example, 1 µm or more but 20 mm or less. Further, the thickness may be 5 µm or more but 10 mm or less, 10 µm or more but 5 mm or less, or 50 µm or more but 3 mm or less.

The thermoplastic resin composition constituting the molded article according to the present invention contains a polyolefin resin, a polyamide resin, and a modified elastomer having a reactive group that reacts with the polyamide resin.

### <1> Polyolefin resin

The polyolefin resin may be an olefin homopolymer and/or an olefin copolymer.

The olefin is not particularly limited, and examples thereof include ethylene, propylene, and an α-olefin having 4 to 8 carbon atoms. Examples of the α-olefin having 4 to 8 carbon atoms include 1-butene, 3-methyl-1-butene, 1-pentene, 3-methyl-1-pentene, 4-methyl-1-pentene, 1-hexene, and 1 -octene. These olefins may be used singly or in combination of two or more of them.

Specific examples of the polyolefin resin include a polyethylene resin, a polypropylene resin, poly-1-butene, poly-1-hexene, and poly-4-methyl-1-pentene. These polymers may be used singly or in combination of two or more of them. That is, the polyolefin resin may be a mixture of two or more of the above polymers.

Examples of the polyethylene resin include an ethylene homopolymer and a copolymer of ethylene and another olefin (except for ethylene). Examples of the latter include an ethylene-1 - butene copolymer, an ethylene-1-hexene copolymer, an ethylene-1-octene copolymer, and an ethylene-4-methyl-1-pentene copolymer (the content of an ethylene-derived structural unit is 50% or more of the total structural units).

Examples of the polypropylene resin include a propylene homopolymer and a copolymer of propylene and another olefin (except for propylene). Examples of the latter include a propylene-ethylene copolymer and a propylene-1-butene copolymer (the content of a propylene-derived structural unit is 50% or more of the total structural units).

Further, the copolymer of propylene and another olefin may be a random copolymer or a block copolymer. Among them, a block copolymer is preferred in terms of excellent fatigue resistance and mechanical strength. Particularly, a propylene-ethylene block copolymer having ethylene as another olefin is preferred. Such a propylene-ethylene block copolymer is also called, for example, an impact copolymer, a polypropylene impact copolymer, a heterophasic polypropylene, or a heterophasic block polypropylene.

The weight-average molecular weight (based on polystyrene standards) of the polyolefin resin measured by gel permeation chromatography (GPC) is not particularly limited, and may be, for example, 10,000 or more but 500,000 or less, but is preferably 100,000 or more but 450,000 or less, more preferably 200,000 or more but 400,000 or less.

It is to be noted that the polyolefin resin is a polyolefin that has no affinity for the polyamide resin that will be described later, and that has no reactive group capable of reacting with the polyamide resin, either. In this point, the polyolefin resin is different from an olefin-based component as the modified elastomer that will be describe later.

### <2> Polyamide resin

The polyamide resin is a polymer obtained by polymerizing a plurality of monomers via amide bonds (-NH-CO-).

Examples of a monomer constituting the polyamide resin include amino acids such as 6-aminocaproic acid, 11-aminoundecanoic acid, 12-aminododecanoic acid, and para-aminomethyl benzoic acid, and lactams such as ε-caprolactam, undecane lactam, and ω-lauryl lactam. These monomers may be used singly or in combination of two or more of them.

The polyamide resin can be obtained also by copolymerization of a diamine and a dicarboxylic acid. In this case, examples of the diamine as a monomer include: aliphatic diamines such as ethylene diamine, 1,3-diaminopropane, 1,4-diaminobutane, 1,6-diaminohexane, 1,7-diaminoheptane, 1,8-diaminooctane, 1,9-diaminononane, 1,10-diaminodecane, 1,11-diaminoundecane, 1,12-diaminododecane, 1,13-diaminotridecane, 1,14-diaminotetradecane, 1,15-diaminopentadecane, 1,16-diaminohexadecane, 1,17-diaminoheptadecane, 1,18-diaminooctadecane, 1,19-diaminononadecane, 1,20-diaminoeicosane, 2-methyl-1,5-diaminopentane, and 2-methyl-1,8-diaminooctane; alicyclic diamines such as cyclohexane diamine and bis-(4-aminocyclohexyl)methane; and aromatic diamines such as xylylene diamines (e.g., p-phenylenediamine and m-phenylenediamine). These diamines may be used singly or in combination of two or more of them.

Examples of the dicarboxylic acid as a monomer include: aliphatic dicarboxylic acids such as oxalic acid, malonic acid, succinic acid, glutaric acid, adipic acid, pimelic acid, suberic acid, azelaic acid, sebacic acid, undecanedioic acid, dodecanedioic acid, brasylic acid, tetradecanedioic acid, pentadecanedioic acid, and octadecanedioic acid; alicyclic dicarboxylic acids such as cyclohexanedicarboxylic acid; and aromatic dicarboxylic acids such as phthalic acid, terephthalic acid, isophthalic acid, and naphthalenedicarboxylic acid. These dicarboxylic acids may be used singly or in combination of two or more of them.

Specific examples of the polyamide resin include polyamide 6, polyamide 66, polyamide 11, polyamide 610, polyamide 612, polyamide 614, polyamide 12, polyamide 6T, polyamide 61, polyamide 9T, polyamide M5T, polyamide 1010, polyamide 1012, polyamide 10T, polyamide MXD6, polyamide 6T/66, polyamide 6T/6I, polyamide 6T/6I/66, polyamide 6T/2M-5T, and polyamide 9T/2M-8T. These polyamides may be used singly or in combination of two or more of them.

In the present invention, among the above-mentioned various polyamide resins, one may be used which has a structure in which a hydrocarbon group between adjacent amide bonds in a main chain has a linear chain of 6 or more carbon atoms (usually 16 or less carbon atoms) (in the present invention, also simply referred to as a "long chain structure"). That is, a polyamide resin having a long chain structure may be used. When a polyamide resin having a long chain structure is used, the content of the long chain structure is preferably 50% or more and may be 100% of all the structural units of the polyamide resin. Specific examples of the polyamide resin having a long chain structure include polyamide 11, polyamide 610, polyamide 612, polyamide 614, polyamide 12, polyamide 6T, polyamide 61, polyamide 9T, polyamide 1010, polyamide 1012, polyamide 10T, and polyamide 9T/2M-8T. These polyamides may be used singly or in combination of two or more of them. The use of such a polyamide resin having a long chain structure makes it possible to provide a thermoplastic resin composition having more excellent fatigue resistance and impact resistance.

Further, in the present invention, among the above-mentioned various polyamide resins, one derived from a plant may be used. A plant-derived polyamide resin is preferred from the viewpoint of environmental protection (particularly from the viewpoint of carbon neutral) because it uses a monomer derived from a plant-derived component such as a vegetable oil.

Examples of the plant-derived polyamide resin include polyamide 11 (hereinafter also simply referred to as "PA11"), polyamide 610 (hereinafter also simply referred to as "PA610"), polyamide 612 (hereinafter also simply referred to as "PA612"), polyamide 614 (hereinafter also simply referred to as "PA614"), polyamide 1010 (hereinafter also simply referred to as "PA1010"), polyamide 1012 (hereinafter also simply referred to as "PA1012"), and polyamide 10T (hereinafter also simply referred to as "PA10T"). These plant-derived polyamide resins may be used singly or in combination of two or more of them.

Among the above plant-derived polyamide resins, PA11 is superior to the other plant-derived polyamide resins in terms of low water absorbability, low specific gravity, and high biomass degree. Polyamide 610 is inferior to PA11 in water absorption rate, chemical resistance, and impact strength, but is excellent in heat resistance (melting point) and strength. Further, polyamide 610 is superior to polyamide 6 or polyamide 66 in terms of low water absorbability and size stability, and therefore can be used as an alternative to polyamide 6 or polyamide 66. Polyamide 1010 is superior to PA11 in heat resistance and strength. Further, polyamide 1010 is comparable in biomass degree to PA11, and therefore can be used for parts required to have higher durability. Polyamide 10T contains an aromatic ring in its molecular skeleton, and therefore has a higher melting point and higher strength than polyamide 1010. Therefore, the use of polyamide 10T makes it possible to use the molded article in a harsher environment.

The weight-average molecular weight (based on polystyrene standards) of the polyamide resin measured by gel permeation chromatography (GPC) is not particularly limited, and may be, for example, 5,000 or more but 100,000 or less, but is preferably 7,500 or more but 50,000 or less, more preferably 10,000 or more but 50,000 or less.

### <3> Modified elastomer

The modified elastomer is an elastomer having a reactive group that reacts with the polyamide resin. This modified elastomer is preferably a component having an affinity for the polyolefin resin. That is, the modified elastomer is preferably a component having compatibilizing effect on the polyamide resin and the polyolefin resin. In other words, the modified elastomer is preferably a compatibilizer for the polyamide resin and the polyolefin resin.

Examples of the reactive group include an acid anhydride group (-CO-O-OC-), a carboxyl group (-COOH), an epoxy group {-C₂O (a three-membered ring structure composed of two carbon atoms and one oxygen atom)}, an oxazoline group (-C₃H₄NO), and an isocyanate group (-NCO). These reactive groups may be used singly or in combination of two or more of them.

The amount of modification of the modified elastomer is not limited as long as the modified elastomer has one or more reactive groups per molecule. Further, the modified elastomer preferably has 1 or more but 50 or less reactive groups, more preferably 3 or more but 30 or less reactive groups, particularly preferably 5 or more but 20 or less reactive groups per molecule.

Examples of the modified elastomer include: a polymer using any monomer capable of introducing a reactive group (a modified elastomer obtained by polymerization using monomers capable of introducing a reactive group); an oxidative degradation product of any polymer (a modified elastomer having a reactive group formed by oxidative degradation); and a graft polymer obtained by graft polymerization of an organic acid on any polymer (a modified elastomer having a reactive group introduced by graft polymerization of an organic acid). These modified elastomers may be used singly or in combination of two or more of them. These modified elastomers may be used singly or in combination of two or more of them.

Examples of the monomer capable of introducing a reactive group include a monomer having a polymerizable unsaturated bond and an acid anhydride group, a monomer having a polymerizable unsaturated bond and a carboxyl group, and a monomer having a polymerizable unsaturated bond and an epoxy group.

Specific examples of the monomer capable of introducing a reactive group include: acid anhydrides such as maleic anhydride, itaconic anhydride, succinic anhydride, glutaric anhydride, adipic anhydride, citraconic anhydride, tetrahydrophthalic anhydride, and butenyl succinic anhydride; and carboxylic acids such as maleic acid, itaconic acid, fumaric acid, acrylic acid, and methacrylic acid. These compounds may be used singly or in combination of two or more of them. Among these compounds, acid anhydrides are preferred, maleic anhydride and itaconic anhydride are more preferred, and maleic anhydride is particularly preferred.

The type of resin constituting the skeleton of the modified elastomer (hereinafter referred to as a "skeletal resin") is not particularly limited, and various thermoplastic resins may be used. As the skeletal resin, one or two or more of the above-mentioned various polyolefin resins may be used. Other examples of the skeletal resin include an olefin-based thermoplastic elastomer and a styrene-based thermoplastic elastomer. These skeletal resins may be used singly or in combination of two or more of them.

The olefin-based thermoplastic elastomer may be a copolymer of two or more olefins.

The olefins may be one or two or more of the various olefins mentioned above as examples of an olefin constituting the polyolefin resin. The olefin-based thermoplastic elastomer is particularly preferably a copolymer of ethylene and an α-olefin having 3 to 8 carbon atoms or a copolymer of propylene and an α-olefin having 4 to 8 carbon atoms.

Specific examples of the copolymer of ethylene and an α-olefin having 3 to 8 carbon atoms include an ethylene-propylene copolymer (EPR), an ethylene-1-butene copolymer (EBR), an ethylene-1-pentene copolymer, and an ethylene-1-octene copolymer (EOR).

Specific examples of the copolymer of propylene and an α-olefin having 4 to 8 carbon atoms include a propylene-1-butene copolymer (PBR), a propylene-1-pentene copolymer, and a propylene-1-octene copolymer (POR). These copolymers may be used singly or in combination of two or more of them.

On the other hand, examples of the styrene-based thermoplastic elastomer include a block copolymer of a styrene-based compound and a conjugated diene compound and a hydrogenated product thereof.

Examples of the styrene-based compound include styrene, alkyl styrenes such as α-methyl styrene, p-methyl styrene, and p-t-butyl styrene, p-methoxy styrene, and vinyl naphthalene. These styrene-based compounds may be used singly or in combination of two or more of them.

Examples of the conjugated diene compound include butadiene, isoprene, piperylene, methyl pentadiene, phenyl butadiene, 3,4-dimethyl-1,3-hexadiene, and 4,5-diethyl-1,3-octadiene. These conjugated diene compounds may be used singly or in combination of two or more of them.

Specific examples of the styrene-based thermoplastic elastomer include a styrenebutadiene-styrene copolymer (SBS), a styrene-isoprene-styrene copolymer (SIS), a styrene-ethylene/butylene-styrene copolymer (SEBS), and a styrene-ethylene/propylene-styrene copolymer (SEPS). These styrene-based thermoplastic elastomers may be used singly or in combination of two or more of them. Among them, SEBS is preferred.

The weight-average molecular weight (based on polystyrene standards) of the modified elastomer measured by gel permeation chromatography (GPC) is not particularly limited, and may be, for example, 10,000 or more but 500,000 or less, but is preferably 35,000 or more but 500,000 or less, more preferably 35,000 or more but 300,000 or less.

### (4) Other components

The thermoplastic resin composition constituting the molded article according to the present invention may contain other components in addition to the polyolefin resin, the polyamide resin, and the modified elastomer. Examples of the other components include a filler (reinforcing filler), a nucleating agent, an antioxidant, a thermal stabilizer, a weatherproofer, a light stabilizer, a plasticizer, an ultraviolet absorber, an antistatic agent, a flame retardant, a flame retardant aid, a slip agent, an antiblocking agent, an antifog agent, a lubricant, an antimicrobial agent, a colorant (pigment, dye), a disperser, a copper inhibitor, a neutralizer, an anti-foam agent, a weld strength improver, a natural oil, a synthetic oil, and a wax. These other components may be used singly or in combination of two or more of them.

Examples of another thermoplastic resin include polyester-based resins (polybutylene terephthalate, polyethylene terephthalate, polycarbonate, polybutylene succinate, polyethylene succinate, and polylactic acid). These other thermoplastic resins may be used singly or in combination of two or more of them.

Examples of the filler include: glass components (e.g., glass fibers, glass beads, glass flakes); silica; inorganic fibers (glass fibers, alumina fibers, carbon fibers), graphite, silicate compounds (e.g., calcium silicate, aluminum silicate, montmorillonite, kaolin, talc, clay), metal oxides (e.g., iron oxide, titanium oxide, zinc oxide, antimony oxide, alumina), carbonates and sulfates of metals such as lithium, calcium, magnesium, and zinc, metals (e.g., aluminum, iron, silver, copper), hydroxides (e.g., aluminum hydroxide, magnesium hydroxide), sulfides (e.g., barium sulfate), carbides (e.g., wood charcoal, bamboo charcoal), titanides (potassium titanate, barium titanate), organic fibers (e.g., aromatic polyester fibers, aromatic polyamide fibers, fluororesin fibers, polyimide fibers, vegetable fibers), and celluloses (e.g., cellulose microfibrils, cellulose acetate). These fillers may be used singly or in combination of two or more of them. These fillers can be used also as nucleating agents.

### <5> Phase structure

The phase structure of the thermoplastic resin composition constituting the molded article according to the present invention is not limited, but examples thereof include the following phase structures (1) to (3).

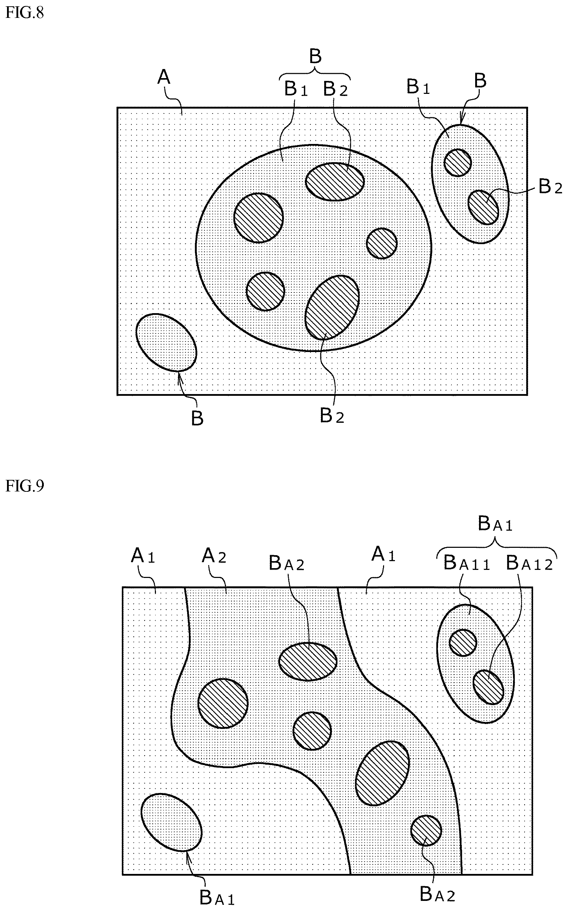

Phase structure (1): A phase structure having a continuous phase (A) containing a polyolefin resin and a dispersed phase (B) dispersed in the continuous phase (A) and containing a polyamide resin and a modified elastomer (see Fig. 8) It is to be noted that the phase structure (1) does not coexist with another phase structure having a continuous phase containing a polyamide resin and a dispersed phase dispersed in the continuous phase.

Phase structure (2): A phase structure having a continuous phase containing a polyamide resin and a dispersed phase dispersed in the continuous phase and containing a polyolefin resin It is to be noted that the phase structure (2) does not coexist with another phase structure having a continuous phase containing a polyolefin resin and a dispersed phase dispersed in the continuous phase.

Phase Structure (3): A phase structure having a continuous phase (A₁) containing a polyolefin resin, a dispersed phase (B_{A1}) dispersed in the continuous phase (A₁) and containing a polyamide resin and a modified elastomer, a continuous phase (A₂) containing a polyamide resin, and a dispersed phase (B_{A2}) dispersed in the continuous phase (A₂) and containing a modified elastomer (see Fig. 9)

Among these phase structures, the phase structure (1) or the phase structure (3) is preferred.

In the phase structure (1), the dispersed phase (B) in the phase structure (1) may further have a continuous phase (B₁) that is present in the dispersed phase (B) and contains the polyamide resin and a fine dispersed phase (B₂) that is dispersed in the continuous phase (B₁) and contains the modified elastomer (see Fig. 8). In this case, the phase structure (1) has a multiple phase structure having a fine dispersed phase (B₁) further dispersed in the dispersed phase (B).

It is to be noted that the modified elastomer present in the phase structure (1) may be an unreacted modified elastomer, a product obtained by reaction with the polyamide resin, or a mixture of them.

The phase structure (3) can be a co-continuous phase structure in which two continuous phases, the continuous phase (A₁) and the continuous phase (A₂), coexist. The dispersed phase (B_{A1}) present in the continuous phase (A₁) may have a continuous phase (B_{A11}) that is present in the dispersed phase (B_{A1}) and contains the polyamide resin and a fine dispersed phase (B_{A12}) that is dispersed in the continuous phase (B_{A11}) and contains the modified elastomer. In this case, the phase structure (3) is a multiple phase structure having a fine dispersed phase (B_{A12}) further dispersed in the dispersed phase (B_{A1}).

It is to be noted that the modified elastomer present in the phase structure (3) may be an unreacted modified elastomer, a product obtained by reaction with the polyamide resin, or a mixture of them.

In the case of the phase structure (1), the continuous phase (A) contains a polyolefin resin. The polyolefin resin is a main component of the continuous phase (A) (the ratio of the polyolefin resin is usually 70% by mass or more and may be 100% by mass with respect to the total mass of the continuous phase A). Further, the dispersed phase (B) contains a polyamide resin and a modified elastomer. The polyamide resin (when the dispersed phase (B) contains a modified elastomer, the polyamide resin and the modified elastomer) is (are) a main component of the dispersed phase (B) (the ratio of the polyamide resin (the polyamide resin and the modified elastomer) is usually 70% by mass or more or may be 100% by mass with respect to the total mass of the dispersed phase B).

When the phase structure (1) is the above-described multiple phase structure, the continuous phase (B₁) contains the polyamide resin. The polyamide resin is a main component of the continuous phase (B₁) (the ratio of the polyamide resin is usually 70% by mass or more and may be 100% by mass with respect to the total mass of the continuous phase B₁). The fine dispersed phase (B₂) contains the modified elastomer. The modified elastomer is a main component of the fine dispersed phase (B₂) (the ratio of the modified elastomer is usually 70% by mass or more and may be 100% by mass with respect to the total mass of the fine dispersed phase B₂).

In the case of the phase structure (3), the continuous phase (A₁) contains a polyolefin resin. The polyolefin resin is a main component of the continuous phase (A₁) (the ratio of the polyolefin resin is usually 70% by mass or more and may be 100% by mass with respect to the total mass of the continuous phase A₁). Further, the dispersed phase (B_{A1}) contains a polyamide resin and a modified elastomer. The polyamide resin and the modified elastomer are a main component of the dispersed phase (B_{A1}) (the ratio of the polyamide resin and the modified elastomer is usually 70% by mass or more and may be 100% by mass with respect to the total mass of the dispersed phase B_{A1}).

When the phase structure (3) is the above-described multiple phase structure, the continuous phase (B_{A11}) contains the polyamide resin. The polyamide resin is a main component of the continuous phase (B_{A11}) (the ratio of the polyamide resin is usually 70% by mass or more and may be 100% by mass with respect to the total mass of the continuous phase B_{A11}). The fine dispersed phase (B_{A12}) contains the modified elastomer. The modified elastomer is a main component of the fine dispersed phase (B_{A12}) (the ratio of the modified elastomer is usually 70% by mass or more and may be 100% by mass with respect to the total mass of the fine dispersed phase B_{A12}).

The continuous phase (A₂) contains the polyamide resin. The polyamide resin is a main component of the continuous phase (A₂) (the ratio of the polyamide resin is usually 70% by mass or more and may be 100% by mass with respect to the total mass of the continuous phase A₂). The dispersed phase (B_{A2}) dispersed in the continuous phase (A₂) contains the modified elastomer. The modified elastomer is a main component of the dispersed phase (B_{A2}) (the ratio of the modified elastomer is usually 70% by mass or more and may be 100% by mass with respect to the total mass of the dispersed phase B_{A2}).

As will be described later, these phase structures can be changed by the blending ratio of the polyolefin resin, the polyamide resin, and the modified elastomer.

It is to be noted that as described above, the thermoplastic resin composition may contain a reaction product obtained by the reaction of the reactive group of the modified elastomer with the polyamide resin. In this case, in the phase structure (1), the reaction product can be present at, for example, the interface between the continuous phase (A) and the dispersed phase (B) and/or the interface between the continuous phase (B₁) and the fine dispersed phase (B₂). Similarly, in the phase structure (3), the reaction product can be present at, for example, the interface between the continuous phase (A₁) and the continuous phase (A₂), the interface between the continuous phase (A₁) and the dispersed phase (B_{A1}), and the interface between the continuous phase (B_{A11}) and the fine dispersed phase (B_{A12}).

The various phase structures can be observed by observing the treated surface of a test specimen (a test specimen of the molded article) subjected to oxygen plasma etching and then to osmium coating with a field-emission scanning electron microscope (FE-SEM). Particularly, the dispersed phase and the fine dispersed phase can be observed in an image enlarged 1000 times or more (usually 10,000 times or less) by such a method. The component constituting each of the phases can be identified by performing energy dispersive X ray spectrometry (EDS) during the observation using the field-emission scanning electron microscope (FE-SEM).

The size of the dispersed phase (the dispersed phase B shown in Fig. 8, the dispersed phase B_{A1} shown in Fig. 9) of the thermoplastic resin composition constituting the molded article according to the present invention is not particularly limited, but the dispersion diameter (average dispersion diameter) of the dispersed phase is preferably 10000 nm or less, more preferably 50 nm or more but 8000 nm or less, even more preferably 100 nm or more but 4000 nm or less.

The dispersion diameter of the dispersed phase can be measured in an electron microscope image enlarged 1000 times or more. More specifically, 20 particles of the dispersed phase are randomly selected in a predetermined area in the image, the largest diameter of each of the particles is measured, and an average of the largest diameters is determined as a first average. Then, first averages measured in 5 different areas in the image are further averaged to determine an average dispersion diameter (major-axis average dispersion diameter) of the dispersed phase.

The size of the fine dispersed phase (the fine dispersed phase B₂ shown in Fig. 8, the fine dispersed phase B_{A12} shown in Fig. 9) contained in the dispersed phase (the dispersed phase B shown in Fig. 8, the dispersed phase B_{A1} shown in Fig. 9) of the thermoplastic resin composition constituting the molded article according to the present invention is not particularly limited, but the dispersion diameter (average dispersion diameter) of the fine dispersed phase is preferably 5 nm or more but 1000 nm or less, more preferably 5 nm or more but 600 nm or less, even more preferably 10 nm or more but 400 nm or less, particularly preferably 15 nm or more but 350 nm or less.

The dispersion diameter of the fine dispersed phase can be measured in an electron microscope image enlarged 1000 times or more. More specifically, 20 particles of the fine dispersed phase are randomly selected in a predetermined area in the image, the largest diameter of each of the particles is measured, and an average of the largest diameters is determined as a first average. Then, first averages measured in 5 different areas in the image are further averaged to determine an average dispersion diameter (major-axis average dispersion diameter) of the fine dispersed phase.

### <6> Blending

When the total of the polyolefin resin, the polyamide resin, and the modified elastomer contained in the thermoplastic resin composition constituting the molded article according to the present invention is taken as 100% by mass, the ratio of the polyolefin resin may be 2% by mass or more but 90% by mass or less. The ratio of the polyolefin resin is preferably 5% by mass or more but 85% by mass or less, more preferably 10% by mass or more but 83% by mass or less, even more preferably 15% by mass or more but 80% by mass or less, even more preferably 20% by mass or more but 78% by mass or less, even more preferably 25% by mass or more but 75% by mass or less, even more preferably 30% by mass or more but 73% by mass or less, even more preferably 35% by mass or more but 70% by mass or less. When the ratio of the polyolefin resin is within the above range, the molded article can achieve both fatigue resistance and mechanical strength.

When the total of the polyolefin resin, the polyamide resin, and the modified elastomer contained in the thermoplastic resin composition constituting the molded article according to the present invention is taken as 100% by mass, the ratio of the polyamide resin and the modified elastomer (part or all of them may be reacted with each other) may be 10% by mass or more but 98% by mass or less. The ratio of the polyamide resin and the modified elastomer is preferably 15% by mass or more but 95% by mass or less, more preferably 17% by mass or more but 90% by mass or less, even more preferably 20% by mass or more but 85% by mass or less, even more preferably 22% by mass or more but 80% by mass or less, even more preferably 25% by mass or more but 75% by mass or less, even more preferably 27% by mass or more but 70% by mass or less, even more preferably 30% by mass or more but 65% by mass or less. When the ratio of the polyamide resin and the modified elastomer is within the above range, the molded article can achieve both fatigue resistance and mechanical strength.

When the total of the polyolefin resin, the polyamide resin, and the modified elastomer contained in the thermoplastic resin composition constituting the molded article according to the present invention is taken as 100% by mass, the ratio of the polyamide resin may be 1% by mass or more but 75% by mass or less. The ratio of the polyamide resin is preferably 2% by mass or more but 70% by mass or less, more preferably 4% by mass or more but 65% by mass or less, even more preferably 6% by mass or more but 60% by mass or less, even more preferably 8% by mass or more but 55% by mass or less, even more preferably 10% by mass or more but 50% by mass or less, even more preferably 12% by mass or more but 45% by mass or less, even more preferably 15% by mass or more but 40% by mass or less. When the ratio of the polyamide resin is within the above range, the molded article can achieve both fatigue resistance and mechanical strength.

When the total of the polyolefin resin, the polyamide resin, and the modified elastomer contained in the thermoplastic resin composition constituting the molded article according to the present invention is taken as 100% by mass, the ratio of the modified elastomer may be 1% by mass or more but 60% by mass or less. The ratio of the modified elastomer is preferably 2% by mass or more but 55% by mass or less, more preferably 4% by mass or more but 45% by mass or less, even more preferably 6% by mass or more but 40% by mass or less, even more preferably 8% by mass or more but 38% by mass or less, even more preferably 10% by mass or more but 37% by mass or less, even more preferably 12% by mass or more but 36% by mass or less, even more preferably 15% by mass or more but 35% by mass or less. When the ratio of the modified elastomer is within the above range, the molded article can achieve both fatigue resistance and mechanical strength.

When the total of the polyolefin resin and the polyamide resin contained in the thermoplastic resin composition constituting the molded article according to the present invention is taken as 100% by mass, the ratio of the polyamide resin may be 1.5% by mass or more but 88% by mass or less. The ratio of the polyamide resin is preferably 3% by mass or more but 75% by mass or less, more preferably 5% by mass or more but 70% by mass or less, even more preferably 10% by mass or more but 65% by mass or less, even more preferably 15% by mass or more but 60% by mass or less, even more preferably 18% by mass or more but 55% by mass or less, even more preferably 20% by mass or more but 50% by mass or less, even more preferably 25% by mass or more but 45% by mass or less. When the ratio of the modified elastomer is within the above range, the molded article can achieve both fatigue resistance and mechanical strength.

When the total of the polyamide resin and the modified elastomer contained in the thermoplastic resin composition constituting the molded article according to the present invention is taken as 100% by mass, the ratio of the modified elastomer may be 20% by mass or more but 90% by mass or less. The ratio of the modified elastomer is preferably 22% by mass or more but 88% by mass or less, more preferably 25% by mass or more but 86% by mass or less, even more preferably 27% by mass or more but 75% by mass or less, even more preferably 29% by mass or more but 70% by mass or less, even more preferably 32% by mass or more but 66% by mass or less, even more preferably 36% by mass or more but 60% by mass or less. When the ratio of the modified elastomer is within the above range, the molded article can achieve both fatigue resistance and mechanical strength.

It is to be noted that in the case of the phase structure (1) (see Fig. 8), the ratio of the polyolefin resin when the total of the polyolefin resin, the polyamide resin, and the modified elastomer is taken as 100% by mass is usually equal to the ratio of the continuous phase (A) when the total mass of the phases of the phase structure (1) is taken as 100% by mass. On the other hand, in the case of the phase structure (3) (see Fig. 9), the ratio of the polyolefin resin when the total of the polyolefin resin, the polyamide resin, and the modified elastomer is taken as 100% by mass is usually equal to the ratio of the continuous phase (A₁) when the total mass of the phases of the phase structure (3) is taken as 100% by mass. The ratio mentioned herein refers to a volume ratio, and is usually also equal to an area ratio reflecting the volume ratio (the same applies hereinafter).

In the case of the phase structure (1) (see Fig. 8), the ratio of the polyamide resin and the modified elastomer when the total of the polyolefin resin, the polyamide resin, and the modified elastomer is taken as 100% by mass is usually equal to the ratio of the dispersed phase (B) when the total mass of the phases of the phase structure (1) is taken as 100% by mass. On the other hand, in the case of the phase structure (3) (see Fig. 9), the ratio of the polyamide resin and the modified elastomer when the total of the polyolefin resin, the polyamide resin, and the modified elastomer is taken as 100% by mass is usually equal to the total ratio of the dispersed phase (B_{A1}), the continuous phase (A₂), and the dispersed phase (B_{A2}) when the total mass of the phases of the phase structure (3) is taken as 100% by mass.

In the case of the phase structure (1) (see Fig. 8), the ratio of the polyamide resin when the total of the polyolefin resin, the polyamide resin, and the modified elastomer is taken as 100% by mass is usually equal to the ratio of the continuous phase (B₁) when the total mass of the phases of the phase structure (1) is taken as 100% by mass. On the other hand, in the case of the phase structure (3) (see Fig. 9), the ratio of the polyamide resin when the total of the polyolefin resin, the polyamide resin, and the modified elastomer is taken as 100% by mass is usually equal to the total ratio of the continuous phase (A₂) and the continuous phase (B_{A11}) present in the dispersed phase when the total mass of the phases of the phase structure (3) is taken as 100% by mass.

In the case of the phase structure (1) (see Fig. 8), the ratio of the modified elastomer when the total of the polyolefin resin, the polyamide resin, and the modified elastomer is taken as 100% by mass is usually equal to the ratio of the fine dispersed phase (B₂) when the total mass of the phases of the phase structure (1) is taken as 100% by mass. On the other hand, in the case of the phase structure (3) (see Fig. 9), the ratio of the modified elastomer when the total of the polyolefin resin, the polyamide resin, and the modified elastomer is taken as 100% by mass is usually equal to the total ratio of the fine dispersed phase (B_{A12}) and the dispersed phase (B_{A2}) when the total mass of the phases of the phase structure (3) is taken as 100% by mass.

### <7> Physical Properties

The molded article according to the present invention can achieve both fatigue resistance and mechanical strength. More specifically, the molded article according to the present invention is not fractured even when a stress of 6.6 MPa is repeatedly applied thereto 1 ×10⁷ times or more in a vibration fatigue test (in accordance with ASTM D671) performed in examples that will be described later. Further, a Charpy impact strength of 40 kJ/m² or more but 160 kJ/m² or less and a flexural modulus of 400 MPa or more but 1500 MPa or less can be imparted as mechanical strength.

The Charpy impact strength and the flexural modulus as mechanical strength may further be 50 kJ/m² or more but 150 kJ/m² or less and 450 MPa or more but 1300 MPa or less, respectively, 60 kJ/m² or more but 140 kJ/m² or less and 500 MPa or more but 1200 MPa or less, respectively, or 70 kJ/m² or more but 130 kJ/m² or less and 550 MPa or more but 1100 MPa or less, respectively.

It is to be noted that the value of the Charpy impact strength is measured in accordance with JIS K7111-1 (type A notch, temperature: 23°C, edgewise test method). The value of the flexural modulus is measured in accordance with JIS K7171 (distance between supporting points: 64 mm, support at two supporting points with a curvature radius of 5 mm, curvature radius of point of application: 5 mm, load application rate: 2 mm/min).

### <8> Production of thermoplastic resin composition

A method for producing the thermoplastic resin composition constituting the molded article according to the present invention is not limited, and the thermoplastic resin composition can be produced by a conventionally known method. For example, the thermoplastic resin composition can be obtained by melt-kneading a polyolefin resin and a melt-kneaded product of a polyamide resin and a modified elastomer. The preparation of the melt-kneaded product and the melt-kneading of the melt-kneaded product and a polyolefin resin may be performed using any melt-kneading device. Examples of the melt-kneading device include an extruder (e.g., a single-screw extruder, a twin-screw melt-kneading extruder), a kneader, and a mixer (e.g., a high-speed flow mixer, a paddle mixer, a ribbon mixer).

It is to be noted that the melt-kneading temperature of a polyamide resin and a modified elastomer is not limited, and may be, for example, 190°C or higher but 350°C or lower, but is preferably 200°C or higher but 330°C or lower, more preferably 205°C or higher but 310°C or lower. The melt-kneading temperature of the obtained melt-kneaded product and a polyolefin resin is not limited, and may be, for example, 190°C or higher but 350°C or lower, but is preferably 200°C or higher but 300°C or lower, more preferably 205°C or higher but 260°C or lower.

### <9> Types and uses of molded article

The shape and dimensions, such as size and thickness, of the molded article according to the present invention are not particularly limited, and the intended use of the molded article according to the present invention is not particularly limited, either. This molded article can be used as, for example, an exterior material, interior material, structural material, or impact absorber for automobiles, railway vehicles, ships, and airplanes. Examples of an automobile part using the molded article include exterior materials for automobiles, interior materials for automobiles, structural materials for automobiles, and impact absorbers for automobiles, and components in engine rooms.

Specific examples of the automobile part include various interior boxes, console boxes (console boxes with lids, console boxes integrally molded with lids), console box lid bodies, cigar sockets, sunvisors, air bag lid bodies, package trays, fenders, instrument panels, assist grips, luggage hinges, shock absorbing members,
various air inlet hoses, intake manifolds, air ducts, air cleaner housings, oil filter housings, oil pans, fuel tank covers,
various boots, fuel tubes,
various seat parts, lumbar supports, contour mats, shock absorbing members, spring members, resin frames, air ducts for driving ottoman, bags for driving ottoman, surface (surface end) fixtures, clamps, brackets, and car pedals (brakes, accelerators).

Further, the molded article can also be used as, for example, an interior material, exterior material, structural material, or shock absorbing material for buildings and furniture. Specific examples thereof include shock-absorbing members, column hinges, doorknobs, doors, and windows. Further, the molded article can also be used as, for example, a package (e.g., a packaging container, a container with a lid body (e.g., a wet tissue container, a drink bottle)) or a containing body (e.g., a small case, a segmented small case, a pill case, a pill container, a toolbox, parts for hinge therefor). Further, the molded article can be used as, for example, a hinge or a hinge structure of a housing or structural body for home appliances (e.g., flat-screen TV sets, refrigerators, washing machines, cleaners, mobile phones, portable game machines, notebook-size personal computers).

### [2] Method for producing molded article

A method for producing a molded article according to the present invention is a method for producing a molded article having a repeatedly-movable part that can repeatedly be bent or curved, wherein
the repeatedly-movable part uses, as a molding material, a thermoplastic resin composition containing a polyolefin resin, a polyamide resin, and a modified elastomer having a reactive group that reacts with the polyamide resin.

In this method, the repeatedly-movable part is as described above. Further, the polyolefin resin, the polyamide resin, the modified elastomer, and the thermoplastic resin composition are also as described above.

As described above, in this method, the repeatedly-movable part is molded using a predetermined thermoplastic resin composition, and other points are not limited. Examples of a molding method that can be used in this method include injection molding, extrusion molding (sheet extrusion, profile extrusion), T-die molding, blow molding, inflation molding, hollow molding, vacuum molding, compression molding, press molding, stamping molding, transfer molding, and foam molding. These molding methods may be used singly or in combination of two or more of them.

The obtained molded article may be either a solid molded article (solid-core molded article, hollow-core molded article) or a foamed molded article.

### EXAMPLES

Hereinafter, the present invention will be specifically described with reference to examples.

### [1] Production of thermoplastic resin composition

### (1) Thermoplastic resin composition of Example 1

Pellets of the following polyamide resin and pellets of the following modified elastomer were dry-blended, then fed into a twin-screw melt-kneading extruder, and melt-kneaded at a kneading temperature of 210°C. The thus obtained melt-kneaded product of the polyamide resin and the modified elastomer was pelletized by a pelletizer to obtain pellets of the melt-kneaded product. Further, the pellets (pellets of the melt-kneaded product of the polyamide resin and the modified elastomer) and pellets of the following polyolefin resin were dry-blended, then fed into a twin-screw melt-kneading extruder, melt-kneaded at a kneading temperature of 210°C, and pelletized by a pelletizer to obtain pellets made of a thermoplastic resin composition.

The mass blending ratio of the polyolefin resin, the polyamide resin, and the modified elastomer of the obtained thermoplastic resin composition is 55 : 25 : 20. The thermoplastic resin composition having such a mass ratio has a phase structure (1) (see Fig. 8).
- Polyolefin resin: polypropylene resin, homopolymer, manufactured by Japan Polypropylene Corporation, product name: "NOVATEC MA1B", weight-average molecular weight: 312,000, melting point: 165°C)
- Polyamide resin: nylon 11 resin, manufactured by Arkema, product name: "Rilsan BMNO", weight-average molecular weight: 18,000, melting point: 190°C
- Modified elastomer: maleic anhydride-modified ethylene-butene copolymer (modified EBR), manufactured by Mitsui Chemicals, Inc., product name: "TAFMER MH7020"

### (2) Thermoplastic resin composition of Example 2

Pellets made of a thermoplastic resin composition (Example 2) were obtained in the same manner as in Example 1 described above. The mass blending ratio of the polyolefin resin, the polyamide resin, and the modified elastomer of the thermoplastic resin composition of Example 2 is 32.5 : 42.5 : 25. The thermoplastic resin composition having such a mass ratio has a phase structure (3) (see Fig. 9). It is to be noted that the polyolefin resin, the polyamide resin, and the modified elastomer used are all the same as those used in Example 1.

### [2] Bending fatigue test (Fatigue resistance evaluation)

Type A (t = 5 mm) test specimens were prepared in accordance with ASTM D671 using the thermoplastic resin composition pellets obtained above in [1].

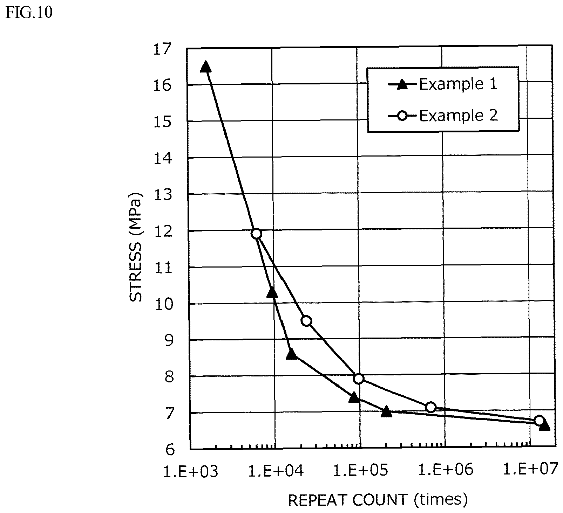

The obtained test specimens were used to determine whether or not they were fractured due to bending fatigue in accordance with ASTM D671 and count the number of times of bending. The results are shown in Table 1 (Example 1) and Table 2 (Example 2). Further, a graph illustrating the correlation between repeat count and stress is shown in Fig. 10.

It is to be noted that measuring conditions for the above measurement are as follows.
Test machine: Repeated vibration fatigue tester (manufactured by Toyo Seiki Seisaku-sho, Ltd., Type "B50TL")
Test temperature: 25°C
Shape of test specimen: ASTM D671 Type-A (t = 5 mm)
Test frequency: 30 Hz

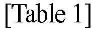

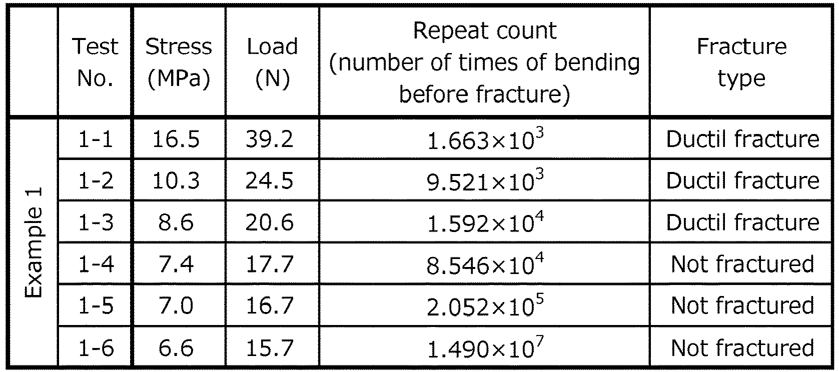

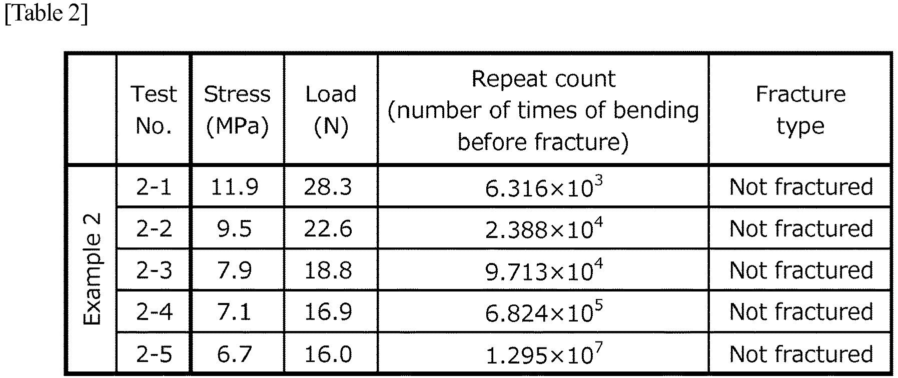

### [3] Mechanical strength test (mechanical strength evaluation)

### (1) Preparation of test specimens for measurement

Test specimens for measurement (molded articles) necessary for measurements were prepared by injection molding using the thermoplastic resin composition pellets obtained above in [1].

### (2) Measurement of Charpy impact strength

Measurement of Charpy impact strength was performed in accordance with JIS K7111-1 using the test specimens for measurement obtained above in [3](1). As a result, the Charpy impact strength of the molded article using the thermoplastic resin composition of Example 1 was 83 kJ/m². On the other hand, the Charpy impact strength of the molded article using the thermoplastic resin composition of Example 2 was 120 kJ/m².

It is to be noted that in the measurement of Charpy impact strength, impact strength was measured at a temperature of 23°C by an edgewise test method using a test specimen for measurement having a notch (type A).

### (3) Measurement of flexural modulus

Measurement of flexural modulus was performed in accordance with JIS K7171 using the test specimens for measurement obtained above in [3](1). As a result, the flexural modulus of the molded article using the thermoplastic resin composition of Example 2 was 885 MPa. On the other hand, the flexural modulus of the molded article using the thermoplastic resin composition of Example 2 was 779 MPa.

The flexural modulus was measured in the following manner. Each of the test specimens for measurement was supported by two supporting points (curvature radius: 5 mm) the distance (L) between which was 64 mm, and a load was applied at a rate of 2 mm/min on a point of action (curvature radius: 5 mm) located at the center between the two supporting points.

### [4] Preparation of hinge parts

Aplate-like member having a length of 100 mm, a width of 30 mm, and a thickness of 2.3 mm was obtained as a molded article by injection molding. The plate-like member had a hinge part (thickness: 0.5 mm) provided at the center in the longitudinal direction thereof so as to be parallel with the width thereof. The injection molding was performed by providing a gate in a direction parallel with the hinge part. As a result, no weld was observed near the hinge part. That is, even when the injection direction was not perpendicular to the hinge part, the hinge part was integrally molded in the molded article so as not to be fractured by bending. Further, the hinge part could be formed without performing preliminary bending after mold opening.

### [5] Effects of Examples

As can be seen from the results of the mechanical strength evaluation in the above [3], the molded article according to the present invention has a Charpy impact strength of 83 to 120 kJ/m² and a flexural modulus of 779 to 885 MPa, and therefore can have excellent mechanical strength. On the other hand, the results of the fatigue resistance evaluation in the above [2] reveal that the molded article according to the present invention can exhibit excellent fatigue resistance at a stress of 7.4 MPa or less (the molded article of Example 1 (Test No. 1-4) and the molded article of Example 1 (Test No. 1-5) were whitened but not fractured). Further, the results reveal that when the stress is 6.7 MPa or less, the molded article according to the present invention can have fatigue resistance even when the number of times of repeated bending exceeds 1 × 10⁷. That is, it can be seen that the molded article according to the present invention can achieve both high fatigue resistance and excellent mechanical strength. Particularly, it can be seen that the molded article of Example 2 is not fractured irrespective of the value of stress (6.7 to 11.9 MPa) and has extremely high fatigue resistance. This can be considered as an effect resulting from the fact that the molded article of Example 2 has a co-continuous phase structure. That is, it can be seen that the molded article of Example 2 can achieve both fatigue resistance and mechanical strength at extremely high levels.

Further, the results of the above [4] reveal that the method according to the present invention is a production method capable of improving the design flexibility of a mold and the shape flexibility of a molded article and of reducing the number of processes.

The foregoing examples are for illustrative purposes only and are in no way to be construed as limiting of the present invention. While the present invention has been described with reference to exemplary embodiments, it is understood that the words which have been used herein are words of description and illustration, rather than words of limitation. As described in detail herein, modification may be made to the embodiments within the scope of the appended claims without departing from the scope and spirit of the present invention. Although the present invention has been described herein with reference to particular structures, materials, and examples, the present invention is not intended to be limited to the particulars disclosed herein; rather, the present invention extends to all functionally equivalent structures, methods, and uses, which are within the scope of the appended claims.

### REFERENCE SIGNS LIST

- 15: Hinge part
- 1A: Open-close lid (console box lid body)
- 1B: Container (Container with integrally-molded hinge part)
- 1C: Part for hinge
- 2A: Bellows tube (Bellows part)
- 2B: Bellows plate (Bellows part)
- 3A: Leaf spring (Leaf spring part)
- A: Continuous phase
- B: Dispersed phase
- B₁: Continuous phase (continuous phase in dispersed phase B)
- B₂: Fine dispersed phase (dispersed phase in dispersed phase B)
- A₁, A₂: Continuous phase
- B_{A1}, B_{A2}: Dispersed phase
- B_{A11}: Continuous phase (continuous phase in dispersed phase B_{A1})
- B_{A12}: Fine dispersed phase (dispersed phase in dispersed phase B_{A1})

## Claims

1. A molded article comprising a repeatedly-movable part capable of being repeatedly bent or curved, wherein
the repeatedly-movable part is made of a thermoplastic resin composition containing a polyolefin resin, a polyamide resin, and a modified elastomer having a reactive group that reacts with the polyamide resin.

2. The molded article according to claim 1, wherein the repeatedly-movable part is integrally molded with another part.

3. The molded article according to claim 1 or 2, wherein the repeatedly-movable part is a hinge part, a bellows part, or a leaf spring.

4. The molded article according to any one of claims 1 to 3, wherein the polyamide resin has a structure in which a hydrocarbon group between adjacent amide bonds in a main chain has a linear chain of 6 or more carbon atoms.

5. The molded article according to any one of claims 1 to 4, wherein the modified elastomer is an olefin-based thermoplastic elastomer having, as a skeleton, a copolymer of ethylene or propylene and an α-olefin having 3 to 8 carbon atoms or a styrene-based thermoplastic elastomer having a styrene skeleton.

6. The molded article according to any one of claims 1 to 5, further comprising:
a continuous phase (A) formed of the polyolefin resin; and
a dispersed phase (B) dispersed in the continuous phase (A) and formed of the polyamide resin and the modified elastomer.

7. The molded article according to claim 6, wherein the dispersed phase (B) has a continuous phase (B₁) containing the polyamide resin and a fine dispersed phase (B₂) dispersed in the continuous phase (B₁) and containing the modified elastomer.

8. A method for producing a molded article including a repeatedly-movable part capable of being repeatedly bent or curved, the method comprising:
using, as a molding material for the repeatedly-movable part, a thermoplastic resin composition containing a polyolefin resin, a polyamide resin, and a modified elastomer having a reactive group that reacts with the polyamide resin.
